Europäisches Patentamt

European Patent Office

Office européen des brevets

(11) Veröffentlichungsnummer: **0 226 747**
**B1**

## EUROPÄISCHE PATENTSCHRIFT

(45) Veröffentlichungstag der Patentschrift: **25.04.90**

(21) Anmeldenummer: **86114485.5**

(22) Anmeldetag: **18.10.86**

(51) Int. Cl.⁵: **B 60 R 1/06**

(54) Fahrzeug-Aussenspiegelhalterung.

(30) Priorität: **18.12.85 DE 3544836**

(43) Veröffentlichungstag der Anmeldung:
**01.07.87 Patentblatt 87/27**

(45) Bekanntmachung des Hinweises auf die
Patenterteilung:
**25.04.90 Patentblatt 90/17**

(84) Benannte Vertragsstaaten:
**AT DE FR GB IT NL SE**

(56) Entgegenhaltungen:
**DE-A-2 715 335**
**FR-A-2 314 078**
**FR-A-2 449 557**
**US-A-3 612 647**
**US-A-4 256 375**

(73) Patentinhaber: **MAN Nutzfahrzeuge**
**Aktiengesellschaft**
**Dachauer Strasse 667 Postfach 50 06 20**
**D-8000 München 50 (DE)**

(72) Erfinder: **Schmidt, Werner**
**Vogelloh 54**
**D-8000 München 50 (DE)**
Erfinder: **Watzek, Gerhard**
**Eduard-Spranger-Strasse 34**
**D-8000 München 45 (DE)**
Erfinder: **John, Herbert**
**Vogelloh 62**
**D-8000 München 50 (DE)**
Erfinder: **Frauscher, Rudolf**
**Prangerlstrasse 4**
**D-8000 München 60 (DE)**

Courier Press, Leamington Spa, England.

**Beschreibung**

Die Erfindung betrifft eine Außenspiegelhalterung für ein Kraftfahrzeug, insbesondere eines Lkw's oder eines Omnibusses, gemäß dem Oberbegriff des Anspruchs 1.

Ein solcher Fahrzeug-Außenspiegel weist einen bügelartigen Träger auf, der ein- oder beidseitig schwenkbar in einer Halterung gelagert ist, die an der Fahrzeug-Seitenwand angebracht ist. An diesem Träger ist der eigentliche Rückspiegel angebracht.

In mindestens einer der Halterungen ist eine Rasteinrichtung vorgesehen, welche so bemessen ist, daß sie nach Überschreiten eines festgelegten Höchst-Drehmoments nachgibt, so daß der Außenspiegel dann, wenn er gegen ein Hindernis anschlägt, ausweichen kann und sich gegen die Fahrzeugseitenwand anlegt. Es ist auch möglich, z.B. Durchfahren enger Durchfahrten vom Fahrer- oder Beifahrersitz aus den Träger zu ergreifen und ihn zusammen mit dem Spiegel einzuschwenken.

In jüngerer Zeit verwendet man elektrisch beheizbare und ggf. auch elektromotorisch verstellbare Rückspiegel, von denen dementsprechend eine elektrische Leitung ausgeht.

Zur Unterbringung dieser elektrischen Leitung ist es bekannt, den Träger als Trägerrohr auszubilden, in dessen innerem die elektrische Leitung untergebracht ist.

Jene Halterung, welche die obenerwähnte Rasteinrichtung aufweist, weist auch die Durchführung für die elektrische Leitung auf und ist bevorzugt die untere der Halterungen.

Die genannte, bekannte Halterung weist eine Grundplatte auf, welche an der Fahrzeug-Seitenwand, etwa der Außenseite der Tür, anbringbar ist. Von dieser Grundplatte ragt eine Konsole ab, welche eine Drehlagerung für das Trägerrohr bildet. Bei der bekannten Halterung ist von der Rückseite der Grundplatte her die Lageröffnung angebohrt; in dieser Bohrung ist eine in die Lageröffnung hineinragende Rastkugel, eine diese gegen die Lageröffnung drückende Schrauben-Druckfeder und ein Schraubstopfen angebracht, der durch Ein- und Ausschrauben in die Bohrung hinein bzw. aus dieser die Vorspannung der Rastfeder bestimmt.

Jener Abschnitt des Trägerrohres, der in der Konsole gelagert ist, weist eine Aussparung auf, in welche die Rastkugel dann einrasten kann, wenn sich der Rückspiegel in seiner Gebrauchsstellung befindet, wenn also das Trägerrohr von der Fahrzeug-Seitenwand abgespreizt ist.

Die aus Rastkugel, Rastfeder und Gewindestopfen gebildete Anordnung dar eine bestimmte Länge nicht überschreiten, da man danach strebt, die gesamte Halterung so flach wie nur möglich zu halten. Aus diesem Grund ist zwangsläufig der Durchmesser der Rastkugel verhältnismäßig klein. Es treten daher verhältnismäßig hohe Rastkräfte auf, so daß zum Vermeiden eines unzulässigen Verschleißes das Trägerrohr mindestens in jedem Bereich, in dem es die Rastaufnahme aufweist, gehärtet sein muß. Wegen der kleinen Abmessungen ist auch eine verhältnismäßig hohe Fertigungsgenauigkeit erforderlich, da die Eintauchtiefe der Rastkugeln (Punktberührung) in die Rastausnehmung in starkem Maße das Auslöse-Drehmoment bestimmt.

Im übrigen hat sich gezeigt, daß die bekannte Halterung das Trägerrohr nicht in jenem Maße in seiner Gebrauchslage festlegt, wie dies erforderlich ist um Vibrationen des Rückspiegels und des Trägerrohres zu vermeiden. Das Problem solcher Vibrationen tritt bei einer solchen Außenspiegelanordnung insbesondere deshalb auf, weil der Außenspiegel infolge der elektrischen Zusatzeinrichtungen besonders schwer ist.

Bei der bekannten Halterung ist ferner die aus dem Ende des Trägerrohres herausgeführte Leitung in zwei Teilleitungen aufgespalten, von welchen jede in einen Flachstecker einmündet, um den Raum unterhalb einer Abdeckhaube, die die gesamte Halterung nach außenhin abschließt und gegenüber der Witterung schützt, möglichst gut auszunützen. Diese Anordnung hat aber den Nachteil, daß bei der Montage auf den Anschluß eines der Flachstecker vergessen werden kann oder beide Flachstecker vertauscht werden können.

Das Auslöse-Drehmoment der Halterung wird bei deren Fertigung eingestellt. Es ist aber möglich, daß sich diese Einstellung durch Abnutzung oder Korrosion im Verlauf längerer Benutzung zur einen oder anderen Seite hin verändert, so daß eine Nachstellung erforderlich ist. Um diese Nachstellung vorzunehmen, ist es bei der bekannten Halterung erforderlich, entweder die gesamte Halterung abzumontieren oder von der Fahrzeug-Innenseite her und abnehmen der Türinnenverkleidung um einen Zugang zum Stopfen der Rasteinrichtung herzustellen, damit dieser je nach Erfordernis hinein- oder herausgeschraubt werden kann, da zum Verringern der überstehenden Höhe der bekannten Halterung die Grundplatte fahrzeugseitig eine Ausstülpung aufweist, welche eine entsprechende Aussparung im Außenblech des Fahrzeuges durchdringt. Aus diesem Grunde ist auch die Anbringung der bekannten Halterung als Nachrüstteil an einem bereits vorhandenen Fahrzeug erschwert.

Ausgehend von diesem Stand der Technik liegt der Erfindung die Aufgabe zugrunde, die eingangs genannte, bekannte Fahrzeug-Außenspiegelhalterung dahingehend weiterzubilden, daß sie einen einfacheren, weniger Teile und unkomplizierteren Aufbau aufweist, der auch die Verwendung als Nachrüstteil erleichtert, vibrationssicherer ist, die genaue Festlegung des Auslöse-Drehmoments ermöglicht, nur geringere Verschleißlinien statt Punktberührung unterworfen ist, wobei das Auslöse-Drehmoment einfacher nachstellbar sein soll.

Diese Aufgabe wird durch die Merkmale des Anspruchs 1 gelöst.

Die Erfindung geht davon aus, daß die Stelle des Rasteingriffes, der das Auslösedrehmoment bestimmt, einen größeren Abstand zur Schwenkachse des Trägerrohres aufweist als dies bei der

2

bekannten Halterung der Fall ist. Es ist somit die Auslösekraft bei gleichbleibendem Auslöse-Drehmoment wesentlich niedriger als bei der bekannten Halterung.

Um dieses Grundprinzip ohne unzulässige Vergrößerung der von der Fahrzeug-Außenseite abragenden Höhe der Halterung zu realisieren, ist als Rasteinrichtung nicht, wie bei der bekannten Halterung, eine radial zum Trägerrohr wirkende Rasteinrichtung, sondern eine axial wirkende Rasteinrichtung vorgesehen. Diese Rasteinrichtung weist eine Rastscheibe auf, die manschettenartig das Trägerrohr umgibt, fest mit diesem verbunden ist und gegen die eine Seite der Konsole anliegt. Die Rastscheibe weist mindestens der Konsole zugewandten Ausstülpung oder Vertiefung auf, welche bei von der Außenseite des Fahrzeugs abstehendem Außenspiegel in die Ausbildung der Rastscheibe eingreift.

Es ist ferner eine Druckfeder angebracht, die sich einerseits auf der von der Rastscheibe abgewandten Seite der Konsole und andererseits auf einem festen Widerlager abstützt, das am Trägerrohr befestigt ist. Diese Druckfeder könnte beispielsweise als Tellerfederpaket ausgebildet sein, ist aber bevorzugt als schraubenförmige Feder ausgebildet.

Um die wirksame Länge der Druckfeder zu verändern, wäre es grundsätzlich möglich, eine Reihe benachbarter Ringnuten im Trägerrohr auszubilden, die zur Aufnahme einer federnden Sicherungsscheibe eingerichtet sind, welche ihrerseits das Widerlager bildet oder dieses abstützt. Durch Einsetzen der Sicherungsscheibe in eine geeignete Ringnut kann die Vorspannung der Druckfeder eingestellt werden.

Erfindungsgemäß ist es aber besonders vorteilhaft, die Außenfläche des Trägerrohres mit einem Vatergewinde zu versehen, auf welches eine das Widerlager bildende oder tragende Mutter aufgeschraubt ist. Hierbei zieht die Druckfeder durch die eingestellte, genau dosierte Vorspannung die Rastscheibe in Rasteingriff mit der komplementaren Ausbildung der Konsole. Tritt das Auslöse-Drehmoment auf, dann gelangt der Rastvorsprung an Rastscheibe oder Konsole außer Eingriff mit der Gegenausbildung bzw. Aufnahme, da das Trägerrohr in der Lagerbohrung der Konsole nicht nur drehbar, sondern auch axial verschieblich ist.

Der Rastvorsprung kann verhältnismäßig groß ausgebildet sein und sich etwa über ein Viertel des Umfangs des Trägerrohres erstrecken. Hierbei ist auch unter Einhaltung einer nur sehr geringen Toleranz die Formgebung der den Rasteingriff bildenden Flächen mit solcher Genauigkeit herstellbar, daß das gewünschte Auslöseverhalten jederzeit erreicht werden kann. Durch nicht ganz komplementäre Ausbildung von Rastvorsprung und Aufnahme kann ferner gewährleistet sein, daß sich diese gegenseitig spielfrei zentrieren.

Da die Geometrie der den Rasteingriff bildenden Flächen praktisch frei wählbar ist, im Gegensatz zu der bekannten Rastausbildung mit einer verhältnismäßig kleinen Rastkugel, die in eine entsprechend schmale Aufnahme eingreift, ist es möglich, einerseits die wirksame Auslösekraft sehr stark zu verringern, andererseits aber dennoch einen vibrationsfreien und zuverlässigen Sitz bis zum Erreichen des Auslöse-Drehmoments zu gewährleisten. Die Auslösekraft kann ferner dadurch noch verringert werden, daß man nicht nur einen Rastvorsprung mit seiner Aufnahme, sondern mehrere solcher Anordnungen vorsieht.

Zusätzlich zu den beschriebenen Vorteilen hat die erfindungsgemäße Halterung jedoch noch weitere Vorteile: So ist z.B. die gesamte Rastrichtung nach Abnehmen der Abdeckhaube ohne weiteres von außen her zugänglich, so daß die den Rasteingriff bildenden Flächen mühelos geschmiert werden können und ggf. eine Nachstellung von außen her einfach dadurch vorgenommen werden kann, daß man die Schraubenmutter verstellt. Ferner ist die erfindungsgemäße Halterung an der Außenseite eines Fahrzeugs selbst an solchen Stellen anbringbar, an denen außer der Schraubenlöcher und einer Durchführung für die elektrische Leitung keine weiteren Bohrungen angebracht werden dürfen.

Es ist zwar grundsätzlich bereits bekannt, eine im Prinzip ähnlich wirkende Rasteinrichtung an der Halterung für einen Fahrzeug-Außenspiegel vorzusehen z.B. FR—A—2,314,078, doch bei der bekannten Anordnung ist anstelle einer Rastscheibe die eine massive Trägerstange durchdringender Stift vorgesehen, der, wenn er ein Trägerrohr durchdringen müßte, die Durchführung einer elektrischen Leitung in dessen innerem behindern würde.

Bei der Erfindung ist es ferner möglich, zwei Rastvorsprünge mit einem solchen Winkelabstand zueinander vorzusehen, wie er der Schwenkbewegung beim Anlegen des Außenspiegels an die Seitenwand des Fahrzeuges entspricht. Somit ist es möglich, daß der nach Überwinden des Auslöse-Drehmoments aus seiner Betriebslage schwenkende Spiegel nicht gegen die Fahrzeug-Seitenwand anschlägt, sondern vorher in eine zweite Rast einfällt und in dieser festgehalten wird. Diese zweite Rast kann vorteilhafter Weise auch so ausgebildet sein, daß ihr Auslöse-Drehmoment wesentlich höher ist als jenes der ersten Rast.

Die Erfindung schafft somit eine Halterung, die trotz ihrer insgesamt geringen Baugröße aus verhältnismäßig groß bemessenen und damit auch reichlich tolerierbaren, wenigen Einzelteilen zusammengesetzt sind, die nach Abnahme der Abdeckhaube ohne jede Schwierigkeit zum Schmieren und Nachstellen von außen her zugänglich sind.

Wie bereits erwähnt, kann die erfindungsgemäße Halterung in ihrer allgemeinen Form verschiedenartige Rastfedern aufweisen. Es ist z.B. möglich das gesamte, bügelartige Trägerrohr als Rastfeder zu verwenden, wobei die Rastscheibe auf der dem Außenspiegel zugewandten Seite der Konsole angebracht ist. Eine Einrichtung zur Nachstellung der Vorspannung dieser "Feder" kann in der anderen der beiden das Trägerrohr schwenkbar aufnehmenden Halterungen angebracht sein.

Es ist auch, wie bereits erwähnt, möglich, eine Feder mit nichtlinearer Konstante zu verwenden, etwa ein Tellerfederpaket, das in Betriebslage des Außenspiegels den Rastvorsprung kräftig in die zugehörige Ausnehmung drückt, beim Aufbringen des Auslöse-Drehmoments dagegen eine zunehmend geringere Federkraft ausübt und somit das Wegschwenken des Spiegels erleichtert. Bevorzugt ist jedoch eine schraubenförmig gewickelete Spiralfeder.

Es ist möglich, diese Feder auf der dem Außenspiegel zugewandten Seite der Konsole anzuordnen, während die Rastscheibe auf der entgegengesetzten Seite der Konsole angeordnet ist. Gemäß einer bevorzugten Ausgestaltung aber weist das Trägerrohr an seinem freien Ende ein Gewinde auf, auf welches die das Widerlager bildende oder diese haltende Schraubenmutter und ggf. eine Sicherung für diese, etwa ein Sicherungsblech oder eine Kontermutter, aufgeschraubt ist. Diese Anordnung erleichtert den Zusammenbau und vereinfacht die Herstellung, da ein nur sehr kurzes Gewinde in das Trägerrohr geschnitten werden muß.

Um die Verschleißfestigkeit der Halterung aus Zink- oder Aluminium-Guß noch weiter zu verbessern, ist gemäß einer weiteren, bevorzugten Ausgestaltung der Erfindung zwischen der Rastscheibe und der Konsole eine Gegenscheibe aus verschleißfestem Material etwa Stahlblech, angeordnet und unverdrehbar formschlüssig in die Konsole von oben eingedrückt.

Gemäß einer weiteren, bevorzugten Ausgestaltung der Erfindung ist die Kupplungsanordnung nicht mehr, wie bisher aus zwei Flachstecker-Verbindungen, sondern aus einer einzigen Steckkupplungsverbindung mit Fixstellung mit mehreren Kontakten gebildet, welche unter der Abdeckhaube Platz findet. Diese Ausgestaltung ist möglich, da die Bauhöhe der Konsole in axialer Richtung des Trägerrohres gesehen, verhältnismäßig gering sein kann, da die Konsole nicht, wie bei der bekannten Halterung, die Rasteinrichtung ausnehmen muß. Es kann somit in der erfindungsgemäßen Halterung ohne oder ohne übermäßige Vergrößerung der Außenabmessungen eine verhältnismäßig große Steckkupplung verwendet werden, da unter der Abdeckhaube hierfür genügend Platz vorhanden ist.

Somit ist ein versehentliches Vergessen des Ansteckens eines der beiden Flachstecker oder deren Austauschen, wie dies bei der bekannten Halterung möglich ist, ausgeschlossen.

Die erfindungsgemäße Grundplatte weist, wie auch die bekannte Grundplatte, Aufnahmeöffnungen für Befestigungsschrauben auf. Diese sind bei der erfindungsgemäßen Grundplatte so symmetrisch angeordnet, daß ein unddieselbe Halterung sowohl für den rechten als auch für den linken Außenspiegel verwendbar ist, analog kann auch der Türspanner für die linke und rechte Türe gleich konzipiert werden.

Ein Ausführungsbeispiel der erfindungsgemäßen FahrzeugAußenspiegelhalterung ist in der beigefügten, schematischen Zeichnung gezeigt; in dieser zeigen:

Fig. 1 die schematische Außenansicht einer eine Außenspiegelanordnung tragenden Lkw-Fahrertür,

Fig. 2 die untere Halterung der Außenspiegelanordnung der Fig. 1, mit abgenommener Abdeckhaube und stark vergrößert, und

Fig. 3 die in Fig. 2 gezeigte Halterung im Längsschnitt und Explosionsdarstellung.

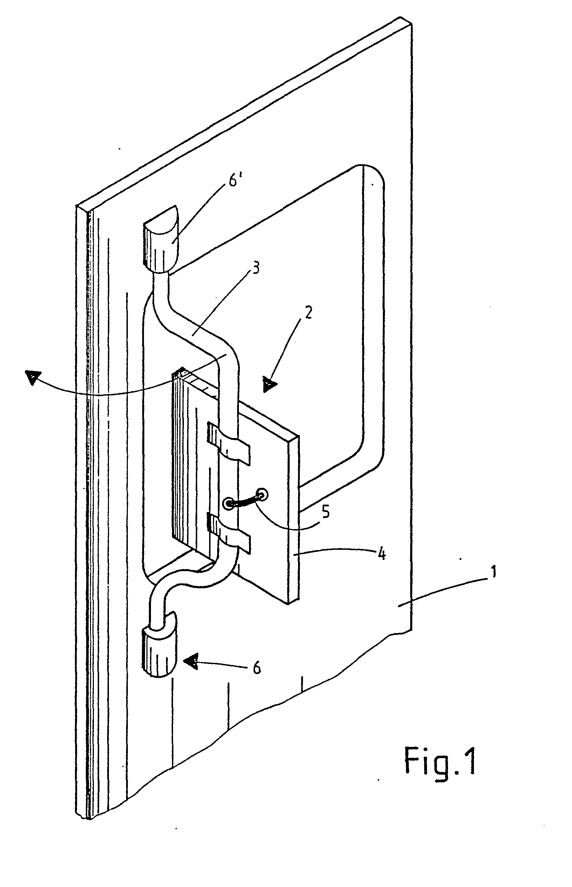

In Fig. 1 ist eine Lkw-Fahrertür 1 gezeigt, an deren Außenseite eine Außenspiegelanordnung 2 angebracht ist. Diese ist aus einem Trägerrohr 3 gebildet, dessen oberer- und unterer Endabschnitt auf einer gemeinsamen Achse liegen und dessen mittlerer Abschnitt gegenüber dieser Achse auswärts, auf die Fahrertür 1 bezogen, versetzt ist, so daß das gesamte Trägerrohr 3 bügelartig gebogen ist.

Im auswärtsversetzten, mittleren Abschnitt ist ein Außenspiegel 4 fest angebracht, der eine elektrische Einrichtung enthält, welche durch eine elektrische Leitung 5 gespeist ist. Diese durchdringt die in Fahrtrichtung weisende Rückseite des Außenspiegels 4 sowie eine Öffnung im Trägerrohr 3 und ist innerhalb dessen nach unten zur unteren Halterung 6 geführt.

Das Trägerrohr 3 ist in dieser unteren Halterung 6 sowie einer dieser gegenüberliegenden, oberen Halterung 6' schwenkbar angebracht. Die in Fig. 1 gezeigte Lage bildet die Betriebslage, in welcher der Außenspiegel 4 vom Fahrer nutzbar ist. Wird jedoch auf den Außenspiegel 4 oder auf den auswärtsgekröpften Teil des Trägerrohres 3 entgegen der Fahrtrichtung eine Kraft ausgeübt, dann klappt, wenn dieser einen gewissen Wert übersteigt, das Trägerrohr 3 zusammen mit dem Außenspiegel 4 in Pfeilrichtung rechts bzw. nach hinten um die von den Halterungen 6 und 6' gebildete Schwenkachse gegen die Außenseite der Fahrertür 1 weg und legt sich gegen diese an und bei einer Kraft in Fahrtrichtung in umgekehrter Weise, nämlich in Pfeilrichtung nach links bzw. nach vorne.

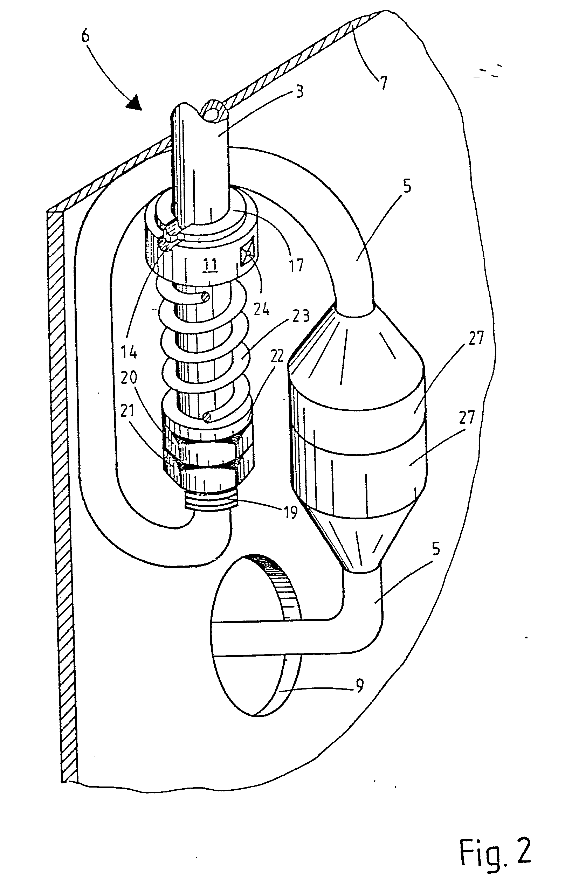

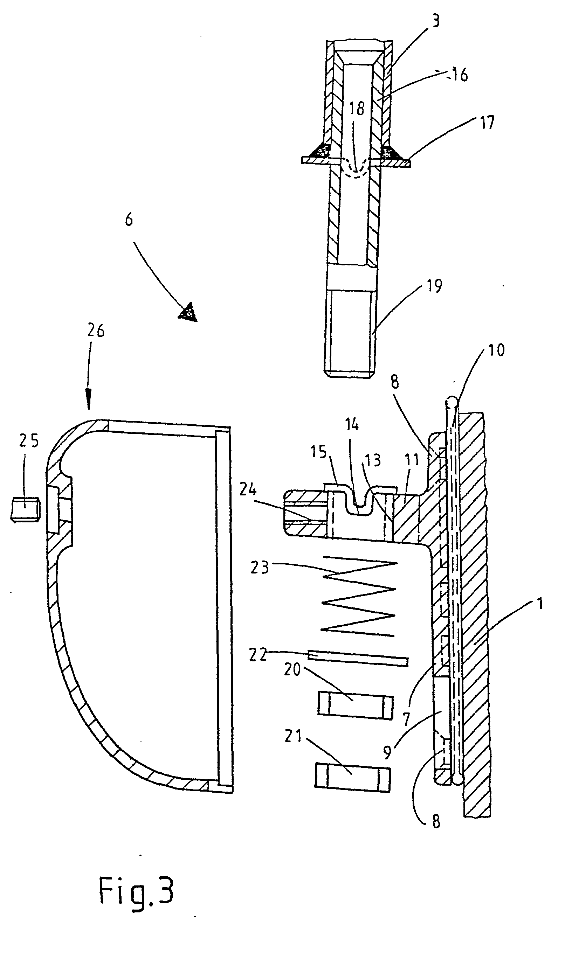

Während die obere Halterung 6' lediglich eine einfache Schwenklagerung bildet, die ggf. auch eine gewisse Axialbewegung (Biegung) des Trägerrohres 3, also eine Bewegung nach oben oder unten zuläßt, enthält die untere Halterung 6, die in Fig. 2 und 3 detaillierter gezeigt ist, den Mechanismus zum Einstellen des Auslöse-Drehmoments, welches überschritten werden muß, damit die Außenspiegelanordnung 2 gegen die Fahrertür 1 angeklappt werden kann.

Die untere Halterung 6 weist eine Grundplatte 7 auf, die Schraublöcher 8 zur Befestigung an der Fahrertür (nur in Fig. 3 gezeigt) sowie eine Durchführungsöffnung 9 für die elektrische Leitung 5 aufweist.

Zwischen der Grundplatte 7 und der Fahrertür 1 ist ferner eine Zwischenlage 10 aus Dichtungsmaterial angebracht, welche die satte lackschonende und vibrationsfreie Anlage der Grundplatte 7 an der Fahrertür 1 gewährleistet.

Die Grundplatte 7 trägt eine Konsole 11, die in der Ausführungsform der Fig. 2 einstückig mit der Grundplatte 7 als Kokillen- oder Druckgußteil ausgebildet ist, während die Elemente 7 und 11 in der Ausführungsform der Fig. 3 getrennt voneinander angefertigt und Element 7 in 11 formschlüssig eingelegt wird.

Die Konsole 11 wird durch eine Lagerbohrung für das Trägerrohr 3 durchdrungen, welches in dieser sowohl drehbar als auch begrenzt in axialer Richtung verschieblich ist.

An der Oberseite weist die Konsole eine Einkerbung auf, welche sich quer über die Oberseite der Konsole 11 hinweg erstreckt und die Mittelachse der Bohrung 13 schneidet. In der Ausführungsform der Fig. 3 ist an der Oberseite der Konsole ferner eine Gegenscheibe 15 angebracht, die aus einem dünnen, verschleißbeständigen Stahlblech gepreßt ist, unverdrehbar (formschlüssig) mit der Konsole verbunden ist und an ihrer freien Oberfläche die Kontur der durchgehenden Rille 14 aufweist.

In das untere Ende des verhältnismäßig dünnwandigen Trägerrohres 3 ist eine Verstärkungsbüchse 16 eingesetzt (Fig. 3).

Das verstärkte Ende des Trägerrohres 3 ist von einer Rastscheibe 17 umgeben, die, wie aus Fig. 3 ersichtlich, eine Bohrung aufweist, durch welche das Trägerrohr 3 passen hindurchgeführt ist. Anschließend ist die Rastscheibe 17 mit dem Trägerrohr 3 und der Verstärkungsbüchse 16 verschweißt. Es könnte auch das Trägerrohr 3 so gestaucht oder gegossen werden, daß sich eine Nocke bildet und somit die Verstärkungsbüchse 16 hinfällig wird.

Wie aus der Zeichnung ersichtlich, weist die Rastscheibe 17 eine quer zu ihr verlaufende, die Mitte ihrer Bohrung schneidende Ausstülpung oder Wulst 18 auf, die etwa komplementär zur querverlaufenden Vertiefung bzw. Rinne 14 ausgebildet ist und so angeordnet ist, daß die Ausstülpung 18 genau dann in der Rinne 14 sitzt, wenn die Außenspiegelanordnung 2 ihre aus Fig. 1 ersichtliche Betriebslage einnimmt.

Der Abstand der Rastscheibe 17 vom freien Ende des Trägerrohres 3 ist so bemessen, daß dieses noch um ein bestimmtes Stück aus der Konsole 11 nach unten herausragt, wenn die Rastscheibe 17 auf der Oberseite der Konsole 11 bzw. auf der Gegenscheibe 15 aufsitzt.

Das untere, freie Ende des Trägerrohres 3 (Verstärkungsbüchse 16) ist mit einem Außengewinde 19 versehen, auf welches eine durch eine Kontermutter 21 gesicherte Mutter 20 aufgeschraubt ist. Hierbei ist bevorzugt das Gewinde 19 als Feingewinde ausgebildet.

Auf der Konsole II zugewandten Seite der Mutter 20 ist eine Scheibe 22 angeordnet, welche das Widerlager für eine Schraubenfeder 23 bildet, die zwischen dieser Scheibe 22 und der zugewandten Unterseite der Konsole 11 unter Vorspannung, also zusammengedrückt, angeordnet ist.

Wie ersichtlich, bestimmt die Geometrie der Rinne 14 bzw. der Ausstülpung 18 einerseits und die Vorspannung der Feder 23 andererseits das Auslösedrehmoment, das auf das untere Ende des Trägerrohres 3 aufzubringen ist, damit sich dieses verdrehen läßt und somit die Außenspiegelanordnung 2 gegen die Fahrertür hin anklappen läßt.

Auf der von der Grundplatt 7 abgewandten Seite der Konsole 11 ist ein Innengewinde 24 vorgesehen, in welches eine Schraube 25 eingreift, die zur Befestigung einer Abdeckhaube 26 dient, welche, auf den Konturen der Grundplatte 7 aufsitzend oder diese umgreifend, die gesamte Halterung abdeckt.

Innerhalb des von der Abdeckhaube 26 umschlossenen Raumes und seitlich neben dem Ende des Trägerrohres 3 ist eine elektrische Steckverbindung 27 angeordnet, die trotz ihrer verhältnismäßig großen Abmessung ohne weiteres unterbringbar ist. Die aus dem unteren Ende des Trägerrohres 3 austretende Leitung 5 ist seitlich vom Trägerrohr nach oben geführt und an der Konsole 11 vorbeigeführt, dann durch den Zwischenraum zwischen Trägerrohr 3 und Grundplatte 7, und schließlich auf der anderen Seite der Konsole 11 nach unten und durch die Durchführung 9, die an der Unterseite der Grundplatte 7 seitlich angebracht ist, hindurch. An der Seite oberhalb der Durchführung 9 ist die Steckkupplung 27 angeordnet.

Die gezeigte, mit einer Rasteinrichtung ausgestattete Halterung 6 ist als untere Halterung ausgebildet, kann aber ggf. als obere Halterung ausgebildet sein.

Nach Lösen der Schraube 25 und Abnehmen der Abdeckhaube 26 sind die Kontermutter 21 und die Mutter 20 ohne weiteres zugänglich so daß mit einfachen Mitteln die Vorspannung der Feder 22 und damit das Auslöse-Drehmoment eingestellt werden kann. Ferner kann bei Verschmutzung der Bereich von Rastscheibe 17 und zugewandter Oberseite der Konsole 11 bzw. Gegenscheibe 15 ausgetauscht oder gereinigt und geschmiert werden. Ist durch einen Umfall das Trägerrohr 3 verbogen, so kann es nach Lösen der Muttern 20, 21 aus der Konsole 11 herausgezogen und durch ein neues Trägerrohr ersetzt werden.

**Patentansprüche**

1. Fahrzeug-Außenspiegelhalterung (6, 6') zur Aufnahme eines Endes, bevorzugt des unteren Endes, eines bügelartig gebogenen Außenspiegel-Trägerrohres (3), in dessen innerem eine elektrische Leitung (5) von der Halterung (6, 6') zu einem am Trägerrohr (3) angebrachten Außenspiegel (4) führt, mit

einer das Ende des Trägerrohres (3) mit dem Trägerrohr (3) drehbar aufnehmenden Konsole (11), die an einer an der Außenseite einer Fahrzeugseitenwand (1) anbringbaren Grundplatte (7) angeordnet ist,

einer aus einem Rastkörper (17) und einer Aufnahme gebildeten Rasteinrichtung (14, 15, 17, 18), die zwischen dem Trägerrohr (3) und der Konsole (11) wirksam ist und eine in ihrer wirksamen Länge einstellbaren Feder (23) aufweist,

einer elektrischen Kupplungsanordnung (27), die am Ende der elektrischen Leitung (5) angebracht ist, und

einer Abdeckhaube (26), die an der Grundplatte (7) angebracht ist und Konsole (11), Rasteinrichtung (14, 15, 17, 18) und eine elektrische Kupplungsanordnung (27) abdeckt, dadurch gekennzeicht,

daß der Rastkörper (11) als eine mindestens eine radial verlaufende, der Konsole (11) zugewandte Rille oder Rippe (18) aufweisende, das Trägerrohr (3) umgebende Rastscheibe (17) ausgebildet ist, die mit einer komplementär geformten Gegenausbildung (14) an der Konsole (11) in Eingriff bringbar ist,

daß am freien Ende das Trägerrohres (3) ein Außengewinde (19) angebracht ist,

daß am Trägerrohr (3) mit Abstand zur Konsole (11) und auf jener ihrer Seiten, die von der Rastscheibe (17) abgewandt ist, ein eine Mutter (20) tragendes Außengewinde (19) angeordnet ist, und

daß zwischen der Mutter (20) und der Konsole (11) eine bevorzugt als Schraubenfeder (23) ausgebildete Druckfeder angebracht ist.

2. Halterung nach Anspruch 1, dadurch gekennzeichnet, daß die Konsole (11) eine der Rastscheibe (17) gegenüberliegende Gegenscheibe (15) aus verschleißfestem Material aufweist bzw. wenn abgenutzt, auch ausgetauscht werden kann.

3. Halterung nach einem der Ansprüche 1 oder 2, dadurch gekennzeichnet, daß die elektrische Kupplungsanordnung (17) als einzige Steckkupplung (27) ausgebildet ist.

**Revendications**

1. Support de rétroviseur extérieur de véhicule (6, 6'), pour recevoir une extrémité, de préférence l'extrémité inférieure, d'un tube support de miroir extérieur (3) plié en forme d'étrier, à l'intérieur duquel est amenée une ligne électrique (5) allant du support (6, 6') à un rétroviseur extérieur (4) monté sur le tube support (3), avec:

une console (11), supportant de manière tournante l'extrémité du tube support (3) avec le tube support (3) et disposée sur une plaque de base (7) susceptible d'être montée sur le côté extérieur d'une paroi latérale de véhicule (1);

un dispositif d'encliquetage (14, 15, 17, 18), constitué d'un corps d'encliquetage (17) et d'un logement et agissant entre le tube support (3) et la console (11) et présentant un ressort (23) dont la longueur efficace est réglable;

un dispositif d'accouplement électrique (27) monté sur l'extrémité de la ligne électrique (5);

un capot de recouvrement (26) monté sur la plaque de base (7) et recouvrant la console (11), le dispositif d'encliquetage (14, 15, 17, 18) et le dispositif d'accouplement (27); caractérisé en ce que:

le corps d'encliquetage (17) est réalisé sous la forme d'au moins un disque d'encliquetage (17) s'étendant radialement, présentant une strie ou nervure (18) tournée vers la console (11), entourant le tube support (3) susceptible d'être engagé sur la console (11) avec une contre pièce (14) de forme complémentaire, en ce qu'un filetage extérieur (29) est adjoint à l'extrémité libre du tube support (3);

un filetage extérieur (19) portant un écrou (20) est disposé sur le tube support (3), à distance de la console (11), et sur chacun de ses côtés opposé au disque d'encliquetage (17);

un ressort de pression réalisé de préférence sous la forme d'un ressort hélicoïdal (23) est monté entre l'écrou (20) et la console (11).

2. Support selon la revendication 1, caractérisé en ce que la console (11) présente un contre disque (15) en matériau résistant à l'usure, en face du disque d'encliquetage (17), disque également interchangeable une fois usé.

3. Support selon l'une des revendications 1 ou 2, caractérisé en ce que le dispositif d'accouplement électrique (27) est réalisé sous forme d'un accouplement enfichable unique (27).

**Claims**

1. Vehicle external-mirror mounting (6, 6') for receiving one end, preferably the bottom end, of an external-mirror carrier tube (3) which is bent in the form of a stirrup and in the interior of which an electric cable (5) leads from the mounting (6, 6') to an external mirror (4) mounted on the carrier tube (3), and having

a bracket (11) rotatable with the carrier tube (3), receiving the end of the carrier tube (3) and being arranged on a base plate (7) mountable on the outer side of a vehicle side wall (1),

a detent device (14, 15, 17, 18) consisting of a locking member (17) and a seat and being operative between the carrier tube (3) and the bracket (11) and having an adjustable spring (23) along its operative length,

an electric coupling arrangement (27) which is fitted on the end of the electric cable (5), and

a covering cap (26) mounted on the base plate (7) and covering bracket (11), detent device (14, 15, 17, 18) and an electric coupling arrangement (27), characterized in that

the locking member (17) is formed as a locking disc (17) surrounding the carrier tube (3) and has at least one radially extending groove or rib (18) facing the bracket (11) and being engageable with a complementary shaped counter-formation (14) on the bracket (11),

an external thread 19 is provided on the free end of the carrier tube (3),

an external thread (19) carrying a nut (20) is arranged on the carrier tube (3) at a distance from the bracket (11) and on the side thereof facing away from the locking disc (17), and

a compression spring formed preferably as a helical spring (23) is provided between the nut (20) and the bracket (11).

2. A mounting according to Claim 1, characterized in that the bracket (11) has a counter-disc (15) made of wear-resistant material and located opposite the locking disc (17) or, when worn, is also replaceable.

3. A mounting according to one of Claims 1 or 2, characterized in that the electric coupling arrangement (27) is formed as a single plug-in coupling (27).

Fig.1

Fig. 2

Fig.3